Europäisches Patentamt

European Patent Office

Office européen des brevets

(11) Publication number: **0 441 479 A2**

## EUROPEAN PATENT APPLICATION

(21) Application number: 91300204.4

(51) Int. Cl.⁵: **G01B 7/14**

(22) Date of filing: 11.01.91

(30) Priority: **07.02.90 GB 9002701**

(43) Date of publication of application:
**14.08.91 Bulletin 91/33**

(84) Designated Contracting States:
**AT BE CH DE DK ES FR GB IT LI LU NL SE**

(71) Applicant: **UNITED KINGDOM ATOMIC ENERGY AUTHORITY**
**11 Charles II Street**
**London SW1Y 4QP(GB)**

(72) Inventor: **Walton, Hyman**
**12 Kirkbeck Drive**
**Beckermet, Cumbria CA21 2YT(GB)**

(74) Representative: **Alderman, John Edward et al**
**United Kingdom Atomic Energy Authority**
**Patents Branch B329 Harwell Laboratory**
**Oxfordshire OX11 0RA(GB)**

(54) **A gauging system.**

(57) A gauging system including a capacitance transducer (10) and a differential charge amplifier (12), in which the differential charge amplifier (12) is arranged to be excited by a variable oscillating voltage so that a component (66) to be tested may be at earth potential. A single transducer (10) may have several electrodes (26) each connected to a respective gauging system.

## A GAUGING SYSTEM

The present invention concerns a gauging system for gauging physical dimensions or surfaces of bodies such as pellets, tubes, pipes, or rods, or non-circular bodies or surfaces such as flat sheet.

According to the present invention, in a gauging system including a capacitance transducer and a differential charge amplifier, the differential charge amplifier is arranged to be excited by a variable oscillating voltage, whereby a component to be gauged can be at earth potential.

The invention will now be further described by way of example only with reference to the accompanying drawings in which:

Figure 1    shows a diagrammatic representation of a gauging system;

Figure 2    shows a representation in medial section of a transducer for use in the system of Figure 1, and

Figure 3    shows a sectional representation on the line III-III of Figure 2.

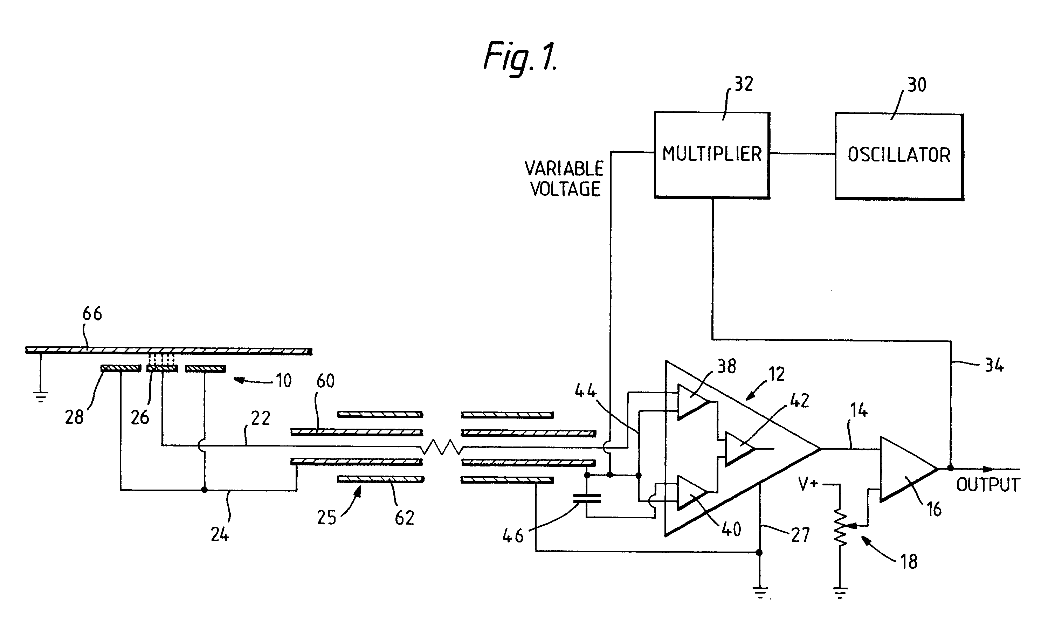

Referring now to Figure 1, a gauging system is shown and comprises a capacitance displacement transducer 10, the transducer 10 being connected to a differential charge amplifier 12 which is a modified form of the amplifier described in British Patent Specification No 1340703 (United States Patent No. 3742349). A dc output line 14 from the amplifier 12 is connected to a summing amplifier performing as a comparator 16. A voltage V + is also connected through an earthed variable resistor 18 to the comparator 16 which has an output that constitutes the signal from the gauging system. The amplifier 12 has two signal lines 22, 24 respectively. The line 22 is connected to a measuring electrode 26 of the transducer 10, whilst the line 24 is connected to a metal guard 28 of the transducer 10. An oscillator 30 is connected through a multiplier 32 to the line 24, the output of the multiplier 32 being varied in response to the output of the comparator 16 through a line 34. An earthed screen 25 surrounds the lines 22, 24 and connects with an earthing connection 27 from the amplifier 12.

In the amplifier 12, charge amplifiers 38, 40 respectively are connected in parallel to a differential amplifier 42. For further information reference is directed to the aforesaid British Patent Specification No 1340703 which is incorporated by reference herein. The charge amplifier 38 is connected to the line 22, and is also electrically connected by a link 44 to the line 24. The charge amplifier 40 is connected to the line 24 and to the charge amplifier 38 through the link 44, and is also electrically connected through a reference capacitor 46 to the line 24.

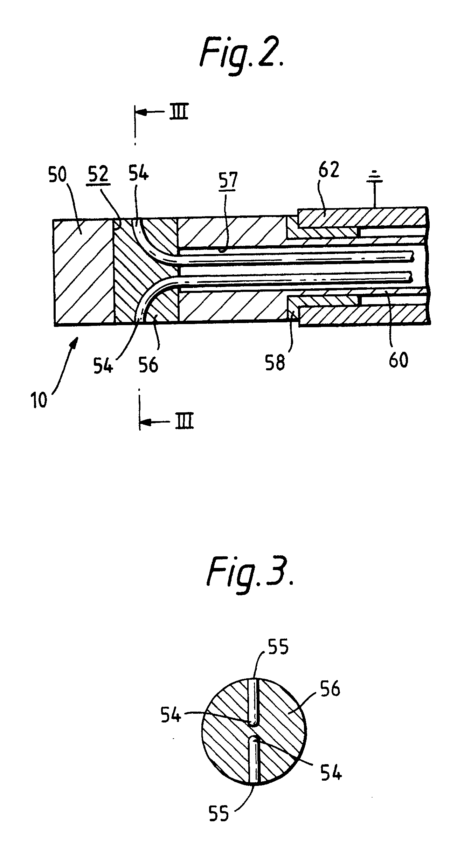

Referring also to Figures 2 and 3, the transducer 10 is of the kind described in British Patent Specification No 2145231 (United States Patent No. 4658254) which is incorporated by reference herein. The transducer 10 comprises a cylindrical copper guard 50 which constitutes the metal guard 28 and has a transverse cylindrical cavity 52 which extends diametrically between the cylindrical perimeter of the guard 50. Two electrically insulated (eg shellac coated), extremely thin copper wires 54 (shown enlarged for clarity) extend through the cavity 52 to present their respective faces 55 in diametrically opposite relationship at the cylindrical perimeter of the guard 50. The wires 54 which at their faces 55 represent the measuring electrode 26 are held in the cavity 52 by a lead solder plug 56, and extend through a longitudinal hole 57 in the guard 50 to connect to respective charge amplifiers 38 of separate gauging systems (only one being shown in Figure 1) and thereby constitute lines 22 of these gauging systems. A shouldered sleeve 58 of an electrical insulating material such as TUFNOL locates on a tubular extension 60 of the guard 50. The extension 60 contains the wires 54 and constitutes part of the line 24 thereby being connected to the charge amplifiers 38, 40. A metal (eg stainless steel) tube 62 which constitutes the screen 25 of Figure 1 locates on the sleeve 58 and extends so as to be connected to the earthed connection 27 from the amplifier 12. A component 66 to be tested, for example a tube or pipe, is earthed and locates adjacent to the transducer 10.

In operation, in each of the two gauging systems which are arranged to operate at different frequencies, the transducer 10 traverses along the component 66 (eg along the bore) and the capacitance between the measuring electrode 26 and the component 66 is represented by a linear output from the comparator 16. The theoretical basis for the gauging system can be derived from British Patent Specification No 1517364 (United States Patent No. 4086528) which is incorporated by reference herein. However, because the differential charge amplifier 12 is driven by the variable signal from the multiplier 32, the component 66 can be at earth potential, which is a considerable advantage when gauging components in situ.

Alternative materials may be used in the gauging system provided that the essential function of conductance and resistance is observed. For example, the lines 22, 24 and the screen 25 may be provided by tri-axial cable, and among the advantages of the invention is that such cable may be relatively long (eg several metres) since the cable length should not have a substantial effect on the calibration sensitivity of the transducer 10.

Although two wires 54 having faces 55 have been shown, alternative numbers of wires 54 may be used not necessarily in pairs, each wire 54 extending through a transverse hole in the guard 50 and being connected to a respective gauging system of Figure 1. This has advantages in that it enables a greater area of the component to be scanned during the traversing of the transducer 10. It will be appreciated that although the gauging system of the invention has been described in relation to dimensional measurement, it may be used in other applications, such as in the assessment of surface finish.

## Claims

1. A gauging system including a capacitance transducer and a differential charge amplifier, characterised in that the differential charge amplifier (12) is arranged to be excited by a variable oscillating voltage (30) whereby a component (66) to be gauged can be at earth potential.

2. A system as claimed in Claim 1, wherein the differential charge amplifier (12) comprises a first and a second charge amplifier (38, 40) respectively connected to discharge in parallel to a differential amplifier 42, and a bridging connection (44) between the first and the second charge amplifiers (38, 40) to which the variable oscillating voltage is arranged to be supplied.

3. A system as claimed in Claim 2, wherein the differential charge amplifier (12) is connected so as to discharge to a comparator (16), the comparator (16) comprising a summing amplifier to which an earthed variable resistor (18) connects, and the output of the comparator (16) constitutes the output of the system.

4. A system as claimed in any one of the preceding Claims, wherein the variable oscillating voltage is provided by means comprising an oscillator (30).

5. A system as claimed in Claim 4 wherein the oscillator (30) discharges to a multiplier (32) which discharges to the bridging connection (44).

6. A system as claimed in Claim 5, wherein the multiplier (32) is connected to the output of the comparator (16) so as to vary the output of the multiplier (32) in response to said output of the comparator (16).

7. A system as claimed in any one of the preceding Claims, wherein the transducer (10) comprises an electrode (26) connectable by a first link (22) to the first charge amplifier (38), and a metal guard (28) therefor connectable by a second link (24) to the bridging connection (44).

8. A system as claimed in Claim 7, wherein a reference capacitor (46) is connectable between the second link (24) and the second charge amplifier (40).

9. A system as claimed in Claim 7 or Claim 8, wherein the metal guard (28) comprises a metal cylinder (50) having a transverse hole (52) therein joined at one end to a longitudinally extending hole (57) therein and extending at the other end thereof to the cylindrical perimeter of the metal cylinder (50), a said electrode (26) locates in the transverse hole (52) at said other end thereof, and the first link (22) extends through the longitudinally extending hole (57) and the transverse hole (52) to the electrode (26), the electrode (26) and the first link (22) being electrically insulated from the metal cylinder (50).

10. A plurality of gauging systems as claimed in Claim 9, wherein a plurality of said transverse holes (52) are provided in the metal cylinder (50), each said transverse hole (52) having a said electrode (26) connected to a said first link (22) therein, and each said first link (22) being connectable to a respective said gauging system.

11. A system or systems as claimed in any one of Claims 7 to 10, wherein the second link (24) extends through a flexible metal screen (62), the screen (62) being electrically insulated from the metal cylinder (50), the first link (22), and the second link (24).

# Fig.1.

VARIABLE VOLTAGE

MULTIPLIER 32

OSCILLATOR 30

OUTPUT

EP 0 441 479 A2

# Fig.2.

# Fig.3.